Europäisches Patentamt

European Patent Office

Office européen des brevets

(19)

(11) **EP 1 643 791 A1**

(12) **EUROPEAN PATENT APPLICATION**

(43) Date of publication:
**05.04.2006 Bulletin 2006/14**

(51) Int Cl.:
*H04Q 7/38* (2006.01)

(21) Application number: **05255867.3**

(22) Date of filing: **22.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.09.2004 US 953817**

(71) Applicant: **LUCENT TECHNOLOGIES INC.**
**Murray Hill, New Jersey 07974-0636 (US)**

(72) Inventors:
• **Ku, Jeng-Yann Wellington**
**Westmont**
**Illinois 60559 (US)**

• **Scheibelhut, David M.**
**Naperville**
**Illinois 60564 (US)**
• **Smith, Harold Robert**
**Oakbrook Terrace**
**Illinois 60147 (US)**
• **Spies, Carl Joseph**
**Lafox**
**Illinois 60147 (US)**

(74) Representative: **Sarup, David Alexander et al**
**Lucent Technologies EUR-IP UK Limited**
**5 Mornington Road**
**Woodford Green, Essex IG8 0TU (GB)**

(54) **Method for determinig a mobility index for a mobile unit**

(57)     The present invention provides a method for paging a mobile unit (306,307). A mobility index is calculated for a mobile unit. The mobility index is calculated using the last interaction of the mobile unit with the MSC (405), the cell sector of the mobile unit, and the time of the last interaction between the mobile unit and an MSC. The system determines (304) the number of cells to page based upon the mobility index, preferably by utilizing the time since the last interaction (304) between the mobile unit and a Mobile Switching Center.

*FIG. 6*

**Description**

FIELD OF THE INVENTION

The present invention relates generally to mobile communication systems, and more particularly to a method of paging a mobile unit in a mobile communication system.

BACKGROUND OF THE INVENTION

In mobile or wireless communication systems, mobile units have the capability to roam within the wireless communication system. When the wireless communication system receives a call request for a mobile unit, the communication system has to locate the mobile unit in order to complete the call.

A mobile unit registers with the wireless communication system when powering up, and also when placing a call. It would be desirable to have the communication system know the location of all mobile units at all times, but this would require each mobile unit to send a location update each time it moved into a new cell. This would be extremely inefficient, since the communication system only need to know the location of the mobile unit when an incoming call request is received, and also because the number of update messages would consume bandwidth that is needed by the communication system to handle calls within the communication system.

The process of paging a mobile consumes many resources within the MSC. These resources include bandwidth over the paging channel, processor occupancy of internal network elements, and the bandwidth for signaling messages between those elements. Paging is costly because the page is generally broadcast to many cells which might contain the mobile unit. If too few cells receive the page, one risks missing the mobile unit. If too many cells receive each page, resource shortages may ensue.

In current wireless communication systems, an MSC (Mobile Switching Center) pages a mobile unit in suspected cells upon receiving a call request for the mobile unit. Paging algorithms typically start by broadcasting to a narrow group of cells, and then broadcast to progressively larger groups in hope of eventually finding the mobile unit. Ideally, one would start with a very small number of cells, perhaps just a single cell, and then progressively widen the scope. Unfortunately, delivering a call to a mobile unit is time-critical. The calling party is likely to abandon the call before the mobile unit is found if too many paging attempts are necessary.

BRIEF SUMMARY OF THE INVENTION

The present invention provides a method for determining a mobility index for a mobile unit in a wireless communication system. The mobility index is used to determine an efficient paging strategy for locating a mobile unit.

Often times a mobile unit is not mobile, but stationary. A typical subscriber of a mobile unit is mobile during certain times of the day, such as when driving to and from work, but is stationary during other times of the day, such as when at work or at home. The present invention utilizes a method for determining the best method of paging a mobile unit, based on the likelihood that the mobile unit is in a particular cell or other interaction area.

The present invention provides a method for paging a mobile unit by an MSC. The MSC calculates the probability that a mobile unit is in the same cell or group of cells as when it last interacted with the MSC based on a mobility index associated with that interaction and the elapsed time since that interaction. The MSC can therefore avoid wasting time on paging strategies with a low probability of success.

The mobility index is preferably calculated based on the last interaction of the mobile unit with the MSC. The mobility indices are preferably calculated for every sector of every cell, and also for the MSC as a whole. The mobility indices can also be calculated for any well-defined interaction area. The MSC can calculate the mobility index for being within the same cell and its immediate neighbors, for being within the same sub-MSC paging area, or for being within the same MSC. In further exemplary embodiments, the MSC can calculate the mobility index for different times of day and for different subscribers.

To calculate the mobility index, the MSC determines the last interaction of the mobile unit with the MSC. The MSC determines the cell and sector of the mobile unit for the last interaction. In an exemplary embodiment, the mobility index is a function of the cell sector. A cell sector serving a busy highway implies high mobility, while a cell sector serving a shopping mall, for example, implies low mobility. The MSC determines the time of the last interaction.

A location-based registration which occurs when a mobile unit moves into a new paging area implies high mobility. A time-based registration, periodically generated by the mobile unit, implies low mobility. All aspects of the interaction: cell, sector, interaction type, time of day, and the class of mobile unit can be used to calculate a mobility index. The exemplary embodiment of the present invention uses cell, sector, and interaction type for calculation.

After determining the mobility index, the MSC then determines the paging strategy. The paging strategy is preferably determined based upon the probability of paging success, which is a function of the mobility index and the elapsed time since the last interaction.

The present invention allows an MSC to determine its first paging strategy based on the mobility implied by the last interaction the mobile unit had with the MSC and how long ago the interaction occurred. The present invention thereby allows an MSC to use a single cell page and/or neighbor page on a mobile unit expected to be stationary. Considerable paging load is thereby reduced in the wireless communication system. The present invention provides a methodology for wireless services to locate mobile units through an efficient paging strategy based on each mobile unit's mobility index, thereby providing for the delivery of calls with minimal yet effective paging resource consumption.

BRIEF DESCRIPTION OF THE SEVERAL VIEWS OF THE DRAWINGS

FIG. 1 depicts a cellular grid of a communication system in accordance with an exemplary embodiment of the present invention.

FIG. 2 depicts a probability sample of the likelihood of a mobile unit being in the cell that last serviced the mobile unit in accordance with an exemplary embodiment of the present invention.

FIG. 3 depicts a flowchart of a method for paging a mobile unit by an MSC using data in the Mobile Unit Paging Database in FIG. 8 in accordance with an exemplary embodiment of the present invention.

FIG. 4 depicts a flowchart of the step of calculating a mobility index for a mobile unit from FIG. 3 to be stored in the Mobile Unit Paging Database in FIG. 8 in accordance with an exemplary embodiment of the present invention.

FIG. 5 depicts a flowchart for gathering statistical data about page responses to be stored in the Cellular Statistics Database in FIG. 9 in accordance with an exemplary embodiment of the present invention.

FIG 6 depicts a flowchart for creating the Cellular Mobility Database in FIG. 7 using data in the Cellular Statistics Database in FIG. 9 in accordance with an exemplary embodiment of the present invention.

FIG. 7 depicts the Cellular Mobility Database in accordance with an exemplary embodiment of the present invention.

FIG. 8 depicts the Mobile Unit Paging Database in accordance with an exemplary embodiment of the present invention.

FIG. 9 depicts the Cellular Statistics Database in accordance with an exemplary embodiment of the present invention.

FIG. 10 depicts the structure of a statistical bucket in accordance with an exemplary embodiment of the present invention.

DETAILED DESCRIPTION OF THE INVENTION

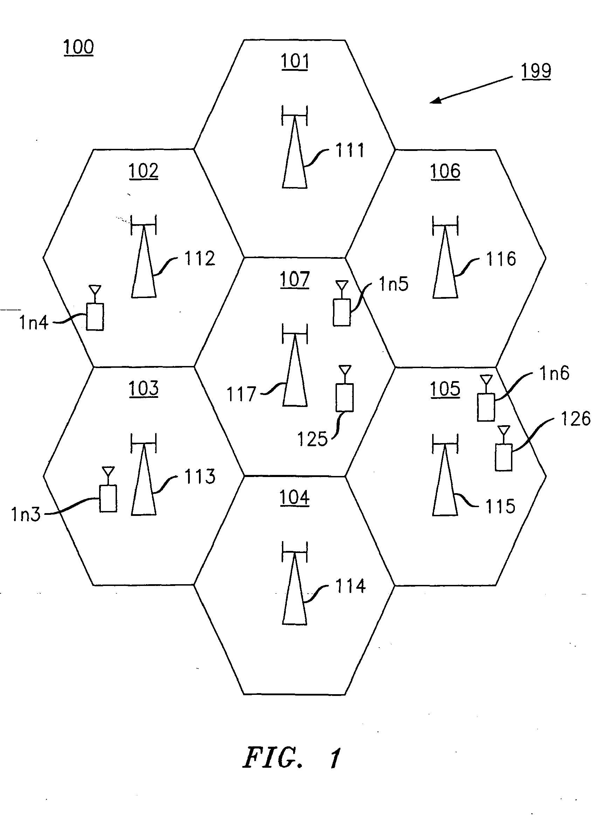

The present invention can be better understood with reference to FIGs. 1 through 10. FIG. 1 depicts a cellular grid 199 of a wireless communication system 100 in accordance with an exemplary embodiment of the present invention. Wireless communication system 100 includes a Ku 2-1-19-4

Mobile Switching Center (MSC) (not pictured) and a plurality of base stations 111 through 117. Each base station transmits and receives signals within a coverage area depicted by cells 101 through 107, respectively. The MSC performs call processing, resource management, and other functions for wireless communication system 100, and controls and communicates with base stations 111 through 117.

Base stations 111 through 117 communication with mobile units located within their cells. Mobile units can move from cell to cell, in which case communication with the mobile unit is handed off to the new base station that is associated with the new cell.

It has been found that much of the time, mobile units are not mobile. A typical mobile unit spends a minority of its time in motion, such as when commuting to and from work, and a majority of its time stationary, such as at home or when in the office.

By using only a cell page or neighbor page on a mobile unit known to be stationary, considerable paging load can be reduced. A cell page to cell 117 pages all sectors of cell 117 and nothing else. A neighbor page would likewise page cell 117 plus all cells with a handoff relationship to cell 117, cells 101 through 106. As used herein, the term "focused pages" refers to cell and neighbor pages.

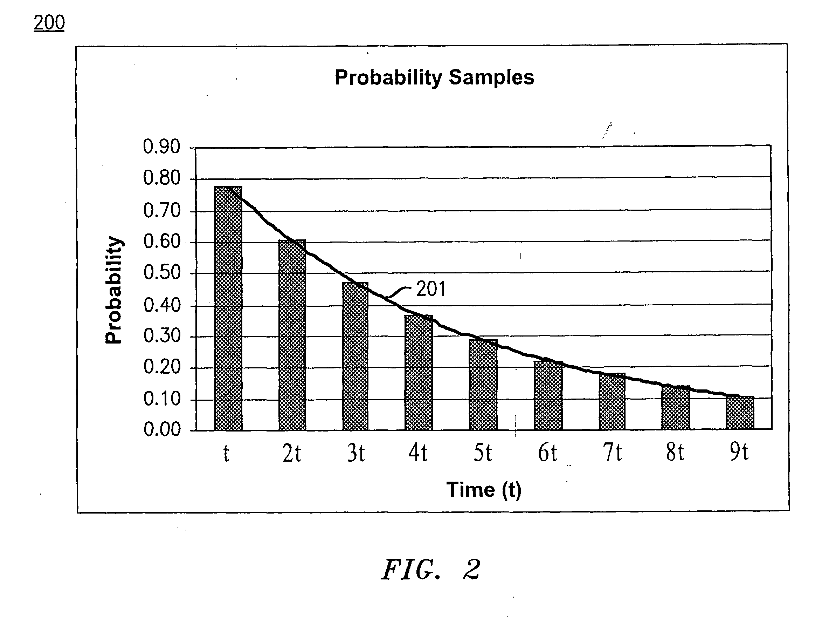

FIG. 2 depicts a probability sample 200 of the likelihood of a mobile unit being in the cell that last serviced the mobile unit in accordance with an exemplary embodiment of the present invention.

The confidence in mobility index 201 is affected by time. For example, at the time of any interaction with the communication system, the probability that a mobile unit is in the domain of the cell serving that interaction is close to 100%. As time progresses, the probability that the mobile unit remains in the domain of the cell that served the last interaction drops. In a preferred embodiment, the probability over time can be modeled as an exponential distribution. The probability can be depicted by Eq. 1.

$$P_{pageable} = e^{-t/M} \qquad (Eq. \ 1)$$

Where :

$P_{pageable}$ is the probably that the mobile unit is pageable in a cell associated with the interaction.
t is the time since the last interaction between a mobile unit and the MSC.
M is the mobility index 201.

In accordance with an exemplary embodiment of the present invention, a mobility index M 201, which represents the mean decay time, is used to predict the probability of paging success at any time t after the last interaction. Mobility index 201 is preferably calculated by recording page response activity in the MSC. The communication system then determines the number of paging messages to initially transmit based upon mobility index 201. The paging type that is selected is the paging type that has a predetermined probability of success.

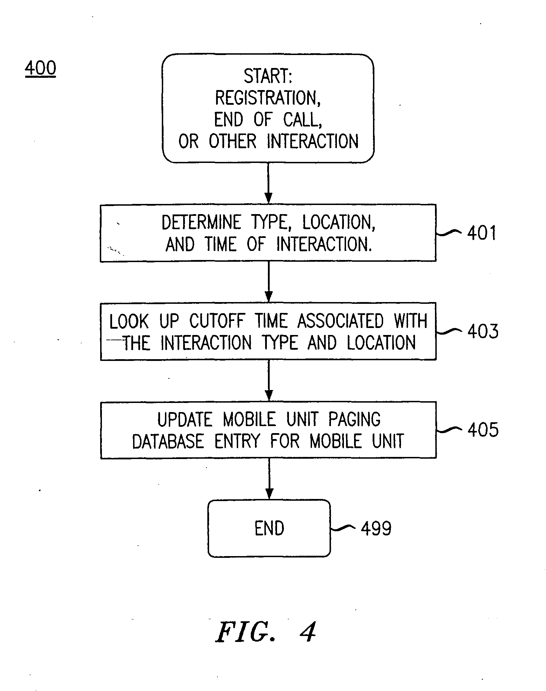

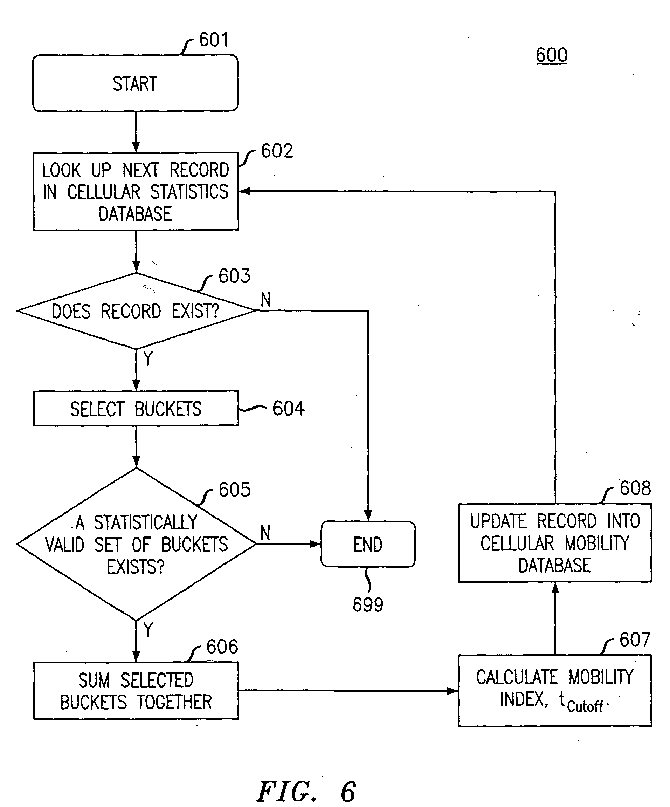

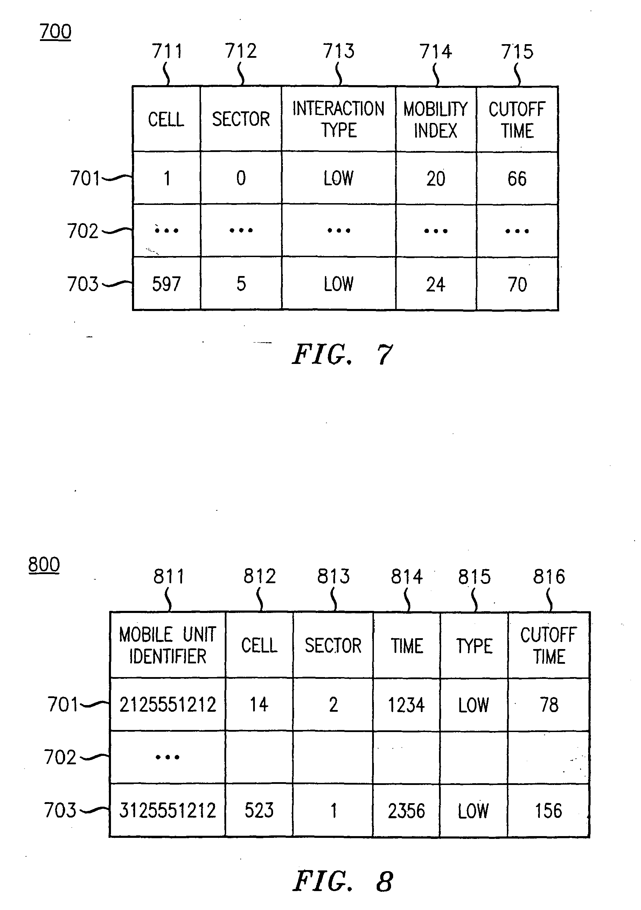

FIG. 7 depicts a Cellular Mobility Database 700 used by the algorithms in FIGs. 4 and 6. In accordance with an exemplary embodiment of the present invention, data is indexed by cell 711, sector 712, and interaction type 713. Cell 711 includes the Cell associated with the interaction. Sector 712 includes the sector of the cell associated with the interaction. Interaction type 713 includes High Mobility, Low Mobility, or Other.

As relevant data, the table includes a mobility index 714 and cutoff time 715. Cutoff time 715 includes the elapsed time since the last interaction representing a cutoff for using a focused page. This data allows the assignment of a unique mobility index and cutoff time for each combination of cell, sector, and interaction type. The intention of this data is that when a mobile unit completes an interaction matching a record in this data base, the mobile unit will be assigned the corresponding mobility index and cutoff time. Rows 701 through 703 represent sample records in this database.

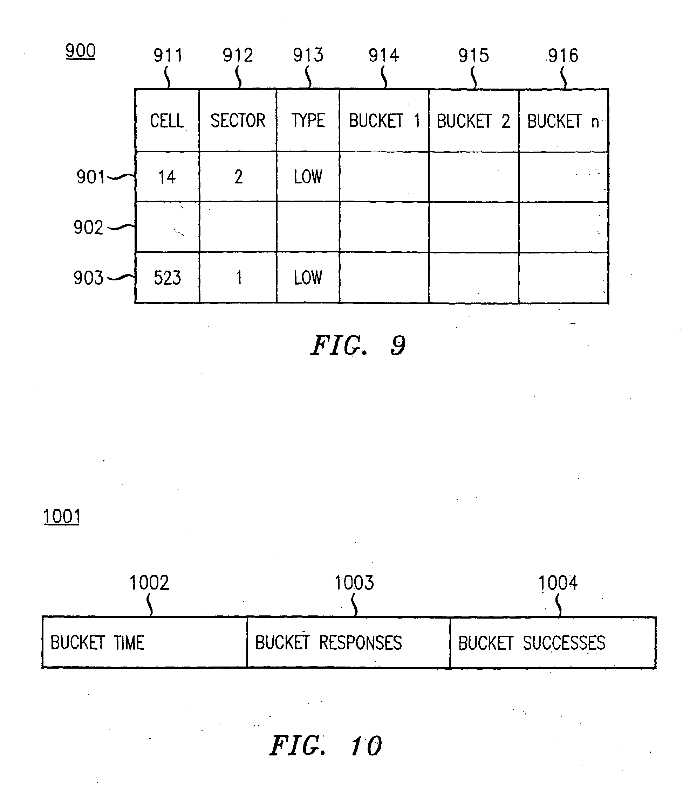

An exemplary embodiment of the present invention utilizes modeling techniques to generate the Cellular Mobility Database in FIG 7 using a Cellular Statistics Database in FIG. 9. The time continuum is divided into buckets. In an exemplary embodiment, each bucket represents 60 seconds. For each bucket we record the probability that a page response comes from the focused paging area. The exponential distribution is then fit to this data.

For a bucket containing page responses for times t through 2t, it can be shown that, given that $\bar{t}$ = the average time for samples in the bucket:

$P_{Bucket}$     The probability a page response comes from within the target area.

Then mobility index 201 can be calculated as:

$$P_{Bucket} = e^{-\bar{t}/M}$$

Mobility Index M 201 can then be calculated using the following equations:

$$\ln(P_{Bucket}) = -\bar{t}/M$$

$$M = -\bar{t}/\ln(P_{Bucket})$$

Mobility index M 201 is used to calculate a cutoff time for any probability $P_{cutoff}$ as:

$$t_{Cutoff} = -M \ \ln(P_{Cutoff})$$

Suppose mobility index 201 is 20 minutes and we have selected $P_{Cutoff}$ of 95%. That is, we want to know when there is a 95% chance that the mobile unit is within its target area. We then calculate $t_{Cutoff}$ as:

$$t_{Cutoff} = -M \ln(P_{Cutoff}) = -20 \ln(.95) = 1.03 \text{ minutes}$$

Call processing can use the value $t_{cutoff}$ to decide whether or not to use a focused page. A focused page is a page that is sent on a predetermined number of base stations. Periodically, as a low priority process, $t_{cutoff}$ should be recalculated.

Although the mobility index can be calculated using data from only one page response, it is preferable to utilize larger samples. In an exemplary embodiment of the present invention, the mobility index is calculated using at least 5 / (1 - $P_{Bucket}$) samples.

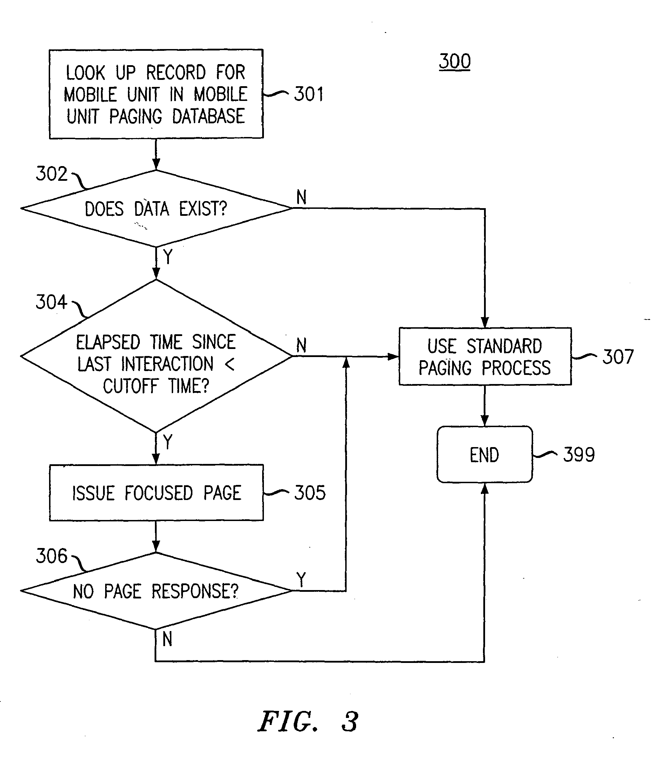

FIG. 3 depicts a flowchart 300 of a method for paging a mobile unit by an MSC in accordance with an exemplary embodiment of the present invention.

The MSC looks up (301) data in the Mobile Unit Paging Database including the time of the last interaction, the interaction type, and the cutoff time associated with that interaction. The cutoff time is preferably calculated based on the last interaction of the mobile unit with the MSC, and is depicted in greater detail in FIG. 4 below.

In an exemplary embodiment, the cutoff times are calculated for every cell, and also for the MSC as a whole. In a further exemplary embodiment, the cutoff times are calculated for larger interaction areas. The algorithm calculates the cutoff time for being within the for a given probability same cell as the last interaction. The MSC can calculate the cutoff time for being within the same cell and its immediate neighbors, for being within the same sub-MSC paging area, or for being within the same MSC. In further exemplary embodiments, the MSC can calculate the cutoff times for different times of day and for different subscribers.

If data does not exist (302), the MSC uses (307) standard paging procedures.

If the elapsed time since the last interaction is greater than the cutoff time as determined in step 304, the MSC uses (307) standard paging procedures.

If data exists and the elapsed time since the last interaction is less than the cutoff time, the MSC issues (305) a focused page.

A mobile unit can have different mobility indices for different levels of granularity. The mobility index for a single cell page might imply a low probability of success while the mobility index for paging a cell and all its neighbors might imply a high probability of success.

FIG 8. depicts the data layout 800 of the Mobile Unit Paging Database. Data layout 800 is indexed by a Mobile Unit identifier 811 and includes as relevant data the cell 812, sector 813, time 814, and type 815 of the last interaction. The cutoff time 816 for conducting a focused page is also included as relevant data. Records in the Mobile Unit Paging database are used by the paging algorithm in FIG. 3, and are created by the Mobile Record Update algorithm in FIG. 4. They are preferably deleted whenever a mobile unit becomes inactive or registers in another MSC.

FIG. 4 depicts a flowchart_400 of the steps of calculating a mobility index for a mobile unit for use in FIG. 3 in accordance with an exemplary embodiment of the present invention.

At the conclusion of an interaction between the mobile unit and the MSC, the MSC determines (401) the interaction type, location, and time. In accordance with an exemplary embodiment of the present invention, interactions between a mobile unit and an MSC are classified as either high mobility interactions, low mobility interaction, or ambiguous interaction. High mobility interactions include a call with more than one handoff and a location-based AR. Low mobility interactions include a call with no handoffs and a time-based AR. Ambiguous interactions include a call with one handoff, power-on AR, and delivery of an SMS message or a MWI message.

In an exemplary embodiment, the mobility index is a function of the cell sector. A cell sector serving a busy highway implies high mobility. A cell sector serving a shopping mall implies low mobility. The cutoff time is a function of the mobility index and the desired probability for a successful focused page.

The MSC then looks up (403) the cutoff time associated with the data in the cellular mobility database. In an exemplary embodiment, each cell/sector/interaction will have its own cutoff time.

The MSC then updates (405) the mobile unit Paging Database entry for the mobile unit. The database is updated with the cutoff time, cell, sector, and interaction time.

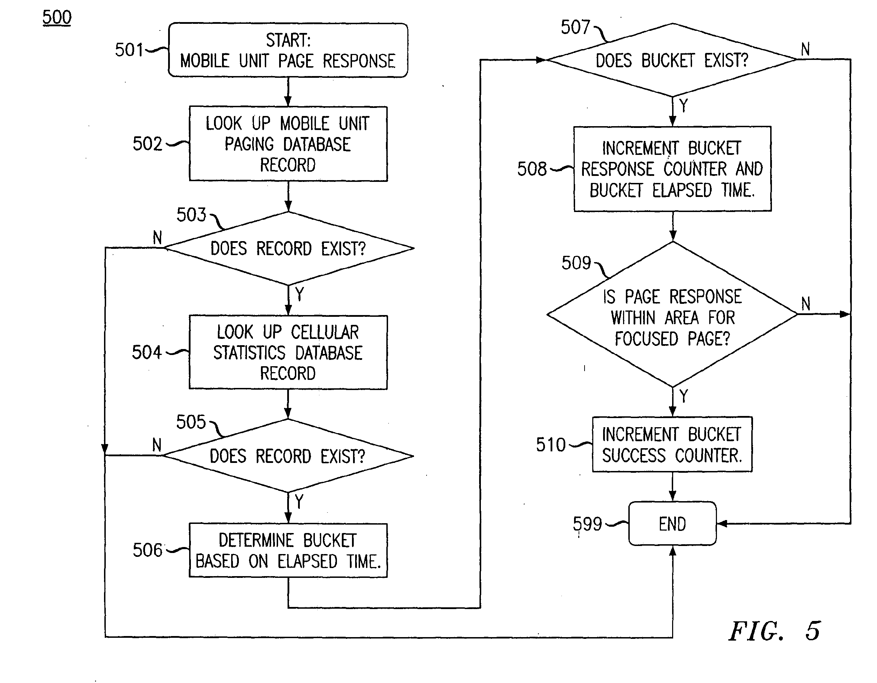

FIG. 5 depicts a flowchart 500 for recording statistics for calculating the mobility index and cutoff time for each combination of cell, sector, and interaction type. Statistics are gathered (501) every time the MSC recognizes a page response from a mobile unit.

After a page response, the MSC looks up (502) the mobile unit in the Mobile Unit Paging Database in order to determine the interaction time, interaction type, and interaction sector cell. If a record exists (503), the data is used to look up (504) a record in the Cellular statistics data base.

If the records are found (505), the MSC uses the Mobile unit paging data base entry and the current time to determine (506) the elapsed time and thus the bucket associated with the interaction. In accordance with an exemplary embodiment of the present invention, there are 15 buckets with each bucket containing 120 seconds of elapsed time. That is, the first bucket contains data for times between 0 and 119 seconds, the second bucket contains data for times between 120 and 239 seconds, and so on.

If the bucket exists (507), the MSC increments (508) the bucket response counter by 1 and the bucket time by the elapsed time between the interaction and the page response. If the page response is within the focused paging area of the interaction (509), the success counter is incremented (510) by one.

FIG. 9 depicts Cellular Statistics Database 900. Cellular Statistics Database 900 is indexed by cell 911, sector 912, and interaction type 913 and includes a set of buckets 914-916 as relevant data. Cellular Statistic Database 900 is preferably populated with all sector cells in the MSC for all interaction types reasonably expected to predict successful focused pages.

FIG. 10 depicts the bucket data structure 1000. Bucket Data Structure 1000 includes three fields, Time 1002, Responses 1003, and Successes 1004. For any given bucket:

$$\bar{t} = \text{bucket time / bucket responses}$$

$$P_{\text{Bucket}} = \text{bucket successes / bucket responses}$$

FIG. 6 depicts flowchart 600 for generating the Cellular Mobility Database of FIG. 7 using data in the Cellular Statistics Database of Fig 9. The resulting Cellular Mobility Database may be used immediately or saved for future use.

Buckets in the Cellular Statistics Database are useable for calculating the mobility index if there are enough samples. In accordance with an exemplary embodiment of the present invention, the minimum number of samples calculated by the MSC is:

$$\text{min\_samples} = 5 / (1 - P_{\text{Cutoff}})$$

These samples should come from buckets with bucket probability close to the probability of interest, $P_{\text{Cutoff}}$.

The Cellular Mobility Database generation algorithm is preferably run periodically. The algorithm iterates through and looks up (602) each record in the Cellular Statistics Database. For each record that exists (603), the algorithm selects (604) a statistically valid set of buckets. If the buckets are statistically valid (605), the algorithm sums (606) those buckets together. That is the fields, bucket_responses, bucket successes, and bucket time are summed together to produce total responses, total successes, and total times.

The algorithm calculates (607) data as:

$$\bar{t} = \text{total times / total responses}$$

$$P = \text{total successes / total responses}$$
$$\text{Mobility Index } M = -\bar{t} / \ln(P)$$
$$t_{\text{Cutoff}} = -M \ln(P_{\text{Cutoff}})$$

The algorithm updates (608) the Cellular Mobility Database with this data.

While this invention has been described in terms of certain examples thereof, it is not intended that it be limited to the above description, but rather only to the extent set forth in the claims that follow.

**Claims**

**1.** A method for paging a mobile unit comprising:

calculating a mobility index for a mobile unit; and
determining the number of cells to page based upon the mobility index.

2. A method for paging a mobile unit in accordance with claim 1, wherein the step of determining the number of cells to page comprises utilizing the time since the last interaction between the mobile unit and a Mobile Switching Center.

3. A method for paging a mobile unit in accordance with claim 1, wherein the step of calculating a mobility index comprises utilizing the last interaction of the mobile unit with the MSC.

4. A method for paging a mobile unit in accordance with claim 1, wherein the step of calculating a mobility index comprises utilizing the cell sector of the mobile unit.

5. A method for paging a mobile unit in accordance with claim 1, wherein the step of calculating a mobility index comprises utilizing the time of the last interaction between the mobile unit and an MSC.

6. A method for paging a mobile unit in accordance with claim 1, wherein the step of calculating a mobility index comprises calculating a mobility index for every cell related to an MSC.

7. A method for paging a mobile unit in accordance with claim 1, wherein the step of calculating a mobility index comprises calculating a mobility index for an MSC.

8. A method for paging a mobile unit in accordance with claim 1, wherein the step of calculating a mobility index comprises calculating a mobility index for the same cell as the last interaction and its immediate neighbors.

9. A method for paging a mobile unit in accordance with claim 1, wherein the step of calculating a mobility index comprises calculating a mobility index for different times of day.

FIG. 1

**Probability Samples**

201

*FIG. 2*

<u>300</u>

```
┌─────────────────────────┐
│   LOOK UP RECORD FOR    │
│  MOBILE UNIT IN MOBILE  │──── 301
│  UNIT PAGING DATABASE   │
└─────────────────────────┘
```

302 — DOES DATA EXIST?  N

Y

304 — ELAPSED TIME SINCE LAST INTERACTION < CUTOFF TIME?  N

Y

ISSUE FOCUSED PAGE — 305

306 — NO PAGE RESPONSE?  Y

N

USE STANDARD PAGING PROCESS — 307

END — 399

*FIG. 3*

400

START:
REGISTRATION,
END OF CALL,
OR OTHER INTERACTION

DETERMINE TYPE, LOCATION,
AND TIME OF INTERACTION. — 401

LOOK UP CUTOFF TIME ASSOCIATED WITH
THE INTERACTION TYPE AND LOCATION — 403

UPDATE MOBILE UNIT PAGING
DATABASE ENTRY FOR MOBILE UNIT — 405

END — 499

*FIG. 4*

FIG. 5

601

600

START

602

LOOK UP NEXT RECORD
IN CELLULAR STATISTICS
DATABASE

603

DOES RECORD EXIST?    N

Y

SELECT BUCKETS    604

605

.A STATISTICALLY
VALID SET OF BUCKETS
EXISTS?    N

END

699

608

UPDATE RECORD INTO
CELLULAR MOBILITY
DATABASE

Y

606

SUM SELECTED
BUCKETS TOGETHER

607

CALCULATE MOBILITY
INDEX, $t_{Cutoff}$.

*FIG. 6*

700

| CELL (711) | SECTOR (712) | INTERACTION TYPE (713) | MOBILITY INDEX (714) | CUTOFF TIME (715) |
|---|---|---|---|---|
| 1 | 0 | LOW | 20 | 66 |
| ... | ... | ... | ... | ... |
| 597 | 5 | LOW | 24 | 70 |

701 — first data row
702 — second data row
703 — third data row

*FIG. 7*

800

| MOBILE UNIT IDENTIFIER (811) | CELL (812) | SECTOR (813) | TIME (814) | TYPE (815) | CUTOFF TIME (816) |
|---|---|---|---|---|---|
| 2125551212 | 14 | 2 | 1234 | LOW | 78 |
| ... | | | | | |
| 3125551212 | 523 | 1 | 2356 | LOW | 156 |

701 — first data row
702 — second data row
703 — third data row

*FIG. 8*

900

911 912 913 914 915 916

| | CELL | SECTOR | TYPE | BUCKET 1 | BUCKET 2 | BUCKET n |
|---|---|---|---|---|---|---|
| 901 | 14 | 2 | LOW | | | |
| 902 | | | | | | |
| 903 | 523 | 1 | LOW | | | |

*FIG. 9*

1001

1002 1003 1004

| BUCKET TIME | BUCKET RESPONSES | BUCKET SUCCESSES |
|---|---|---|

*FIG. 10*

**European Patent Office**

## EUROPEAN SEARCH REPORT

Application Number

EP 05 25 5867

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MADHAVAPEDDY S ET AL: "Adaptive paging algorithms for cellular systems" VEHICULAR TECHNOLOGY CONFERENCE, 1995 IEEE 45TH CHICAGO, IL, USA 25-28 JULY 1995, NEW YORK, NY, USA,IEEE, US, vol. 2, 25 July 1995 (1995-07-25), pages 976-980, XP010167087 ISBN: 0-7803-2742-X * abstract * * page 976, right-hand column * * page 977, right-hand column * * page 978; figure 3 * * page 980, right-hand column * ----- | 1-9 | H04Q7/38 |
| X | US 6 035 203 A (HANSON ET AL) 7 March 2000 (2000-03-07) * abstract * * figures 1,5 * * column 1, line 50 - line 63 * * column 3, line 23 - column 4, line 22 * ----- | 1-9 | |
| X | LYBEROPOULOS G L ET AL: "INTELLIGENT PAGING STRATEGIES FOR THIRD GENERATION MOBILE TELECOMMUNICATION SYSTEMS" IEEE TRANSACTIONS ON VEHICULAR TECHNOLOGY, IEEE SERVICE CENTER, PISCATAWAY, NJ, US, vol. 44, no. 3, 1 August 1995 (1995-08-01), pages 543-553, XP000526045 ISSN: 0018-9545 * abstract * * page 544, right-hand column - page 546, left-hand column * ----- | 1-9 | **TECHNICAL FIELDS SEARCHED (IPC)** H04Q |

The present search report has been drawn up for all claims

| Place of search | Date of completion of the search | Examiner |
|---|---|---|
| Munich | 31 January 2006 | Matt, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 5867

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2006

| Patent document cited in search report | | Publication date | Patent family member(s) | | Publication date |
|---|---|---|---|---|---|
| US 6035203 | A | 07-03-2000 | CA | 2219839 A1 | 24-06-1998 |

EPO FORM P0459

For more details about this annex : see Official Journal of the European Patent Office, No. 12/82